(19) Europäisches Patentamt
European Patent Office
Office européen des brevets

(11) **EP 3 190 480 B1**

(12) **FASCICULE DE BREVET EUROPEEN**

(45) Date de publication et mention
de la délivrance du brevet:
**03.10.2018 Bulletin 2018/40**

(51) Int Cl.:
*G06F 3/01* (2006.01)     *A61B 5/0476* (2006.01)

(21) Numéro de dépôt: **17150232.1**

(22) Date de dépôt: **04.01.2017**

(54) **MÉTHODE DE CALIBRATION D'UNE INTERFACE NEURONALE DIRECTE PAR RÉGRESSION MULTIVOIE PÉNALISÉE**

METHODE ZUR KALIBRIERUNG EINER DIREKTEN NEURONALEN SCHNITTSTELLE DURCH EINE MIT NACHTEILEN VERBUNDENE MEHRWEGIGE REGRESSION

METHOD FOR CALIBRATING A DIRECT NEURAL INTERFACE BY PENALISED MULTI-CHANNEL REGRESSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.01.2016 FR 1650092**

(43) Date de publication de la demande:
**12.07.2017 Bulletin 2017/28**

(73) Titulaire: **Commissariat à l'Energie Atomique et aux Energies Alternatives 75015 Paris (FR)**

(72) Inventeurs:
• **AKSENOVA, Tetiana 38120 Saint-Egreve (FR)**
• **YELISYEYEV, Andriy 38100 Grenoble (FR)**

(74) Mandataire: **Brevalex 56, Boulevard de l'Embouchure B.P. 27519 31075 Toulouse Cedex 2 (FR)**

(56) Documents cités:
**WO-A1-2011/144959     WO-A1-2013/057544**

• **ANDREY ELISEYEV ET AL: "Recursive N-Way Partial Least Squares for Brain-Computer Interface", PLOS ONE, vol. 8, no. 7, 26 juillet 2013 (2013-07-26), XP055178425, DOI: 10.1371/journal.pone.0069962**

**Description**

**DOMAINE TECHNIQUE**

L'objet de la présente invention concerne le domaine des interfaces neuronales directes encore dénommées BCI (*Brain Computer Interface*) ou BMI (*Brain Machine Interface*). Elle trouve notamment à s'appliquer à la commande neuronale directe d'une machine, telle qu'un exosquelette ou un ordinateur.

**ÉTAT DE LA TECHNIQUE ANTÉRIEURE**

Les interfaces neuronales directes utilisent les signaux électro-physiologiques émis par le cortex cérébral pour élaborer un signal de commande. Ces interfaces neuronales ont fait l'objet de nombreuses recherches notamment dans le but de restaurer une fonction motrice à un sujet paraplégique ou tétraplégique à l'aide d'une prothèse ou d'une orthèse motorisée.

Les interfaces neuronales peuvent être de nature invasive ou non invasive. Les interfaces neuronales invasives utilisent des électrodes intracorticales (c'est-à-dire implantées dans le cortex) ou des électrodes corticales (disposées à la surface du cortex) recueillant dans ce dernier cas des signaux électrocorticographiques (EcoG). Les interfaces neuronales non invasives utilisent des électrodes placées sur le cuir chevelu pour recueillir des signaux électroencéphalographiques (EEG). D'autres types de capteurs ont été également envisagés comme des capteurs magnétiques mesurant les champs magnétiques induits par l'activité électrique des neurones du cerveau. On parle alors de signaux magnétoencéphalographiques (MEG).

Quel que soit le type des signaux recueillis (EEG, ECoG, MEG), l'interface BCI doit effectuer un traitement de signal afin d'estimer la trajectoire du mouvement désiré par le sujet et en déduire les signaux de commande de l'ordinateur ou de la machine. Par exemple, lorsqu'il s'agit de commander un exosquelette, l'interface BCI estime la trajectoire du mouvement désiré à partir des signaux électro-physiologiques mesurés et en déduit les signaux de contrôle permettant à l'exosquelette de reproduire la trajectoire en question. De manière similaire, lorsqu'il s'agit de commander un ordinateur, l'interface BCI estime par exemple la trajectoire souhaitée d'un pointeur ou d'un curseur à partir des signaux électro-physiologiques et en déduit les signaux de commande du curseur/pointeur.

L'estimation de trajectoire, encore dénommée décodage neuronal dans la littérature, nécessite généralement une phase d'apprentissage ou de calibration préalable. Lors de cette phase, le sujet imagine, observe ou réalise un mouvement selon une trajectoire déterminée pendant un intervalle de calibration donné. Les signaux électro-physiologiques mesurés pendant cet intervalle sont exploités en relation avec la trajectoire déterminée pour construire un modèle prédictif, et plus précisément pour calculer les paramètres de ce modèle. En pratique, la phase de calibration prend en compte un grand nombre de mouvements successifs, les paramètres du modèle prédictif étant corrigés en fonction des erreurs de prédiction.

L'interface BCI utilise ensuite le modèle prédictif ainsi obtenu pour estimer la trajectoire souhaitée à partir des signaux électro-physiologiques mesurés.

De nombreuses méthodes de construction de modèle prédictif pour interface neuronale directe ont été proposées dans l'état de la technique. La méthode de régression des moindres carrés partiels ou PLS (*Partial Least Squares regression*) fait partie des plus prometteuses en raison de sa capacité à réduire la dimension des vecteurs d'observation. On rappelle que la méthode PLS est une méthode permettant de déterminer un modèle de prédiction linéaire entre des variables d'entrée (ou variables prédictives) et des variables de sortie en faisant appel à des variables latentes (c'est-à-dire inobservables) explicatives des variables de sortie et des variables d'entrée, et liées par une régression linéaire.

On trouvera une description détaillée de la méthode PLS dans l'article de P. Geladi et al. intitulé « Partial least-squares regression : a tutorial » publié dans Analytica Chimica Acta, 185, pages 1-17, 1986, ainsi que dans la thèse de S. Vancolen intitulée « La régression PLS », Juin 2004.

Plus précisément, on note $\mathbf{x}_k$ le vecteur (de dimension $n$, où $n$ est le nombre d'électrodes) des signaux neuronaux acquis à l'instant $t_k$, et $\mathbf{y}_k$ le vecteur (de dimension $m$) des variables décrivant la trajectoire (par exemple $m=9$, les variables étant les coordonnées dans l'espace du point de la trajectoire, les composantes du vecteur vitesse et les composantes du vecteur accélération à l'instant considéré). On forme la matrice d'observations $\mathbf{X} = (\mathbf{x}_1,...,\mathbf{x}_N)^T$ de taille $N \times n$ représentant les signaux neuronaux en $N$ instants successifs et la matrice d'observations $\mathbf{Y} = (\mathbf{y}_1,...,\mathbf{y}_N)^T$ de taille $N \times m$ décrivant la trajectoire en ces mêmes instants. L'algorithme PLS est un processus itératif permettant de modéliser une relation linéaire entre des variables d'entrée et des variables de sortie sur la base de leurs observations respectives (ici la matrice d'observation $\mathbf{X}$ pour les variables d'entrée et la matrice d'observation $\mathbf{Y}$ pour les variables de sortie), soit :

$$\mathbf{Y} = \mathbf{XB} + \mathbf{V} \qquad (1)$$

où **B** est une matrice de coefficients et **V** une matrice de bruit. Les matrices **X** et **Y** sont projetées dans des espaces de faibles dimensions (espace des variables latentes) de manière à expliquer simultanément les variations de **X** et **Y**.

Lors de la première itération, la projection sur les espaces des variables latentes peut s'exprimer par :

$$\mathbf{X} = \mathbf{t}_1 \mathbf{p}_1^{\mathrm{T}} + \mathbf{E}_1 \tag{2-1}$$

$$\mathbf{Y} = \mathbf{u}_1 \mathbf{q}_1^{\mathrm{T}} + \mathbf{F}_1 \tag{2-2}$$

où $\mathbf{t}_1, \mathbf{u}_1$ sont des vecteurs de variables latentes (encore dénommés vecteurs de cotes ou « *score vectors* »), $\mathbf{p}_1, \mathbf{q}_1$ sont des vecteurs de charges ou « *loading vectors* ») et $\mathbf{E}_1, \mathbf{F}_1$ sont des matrices résiduelles. Les vecteurs de cotes sont calculés de manière à maximiser la covariance entre $\mathbf{t}_1$ et $\mathbf{u}_1$ et le coefficient de régression $b_1$ entre $\mathbf{t}_1$ et $\mathbf{u}_1$ est déterminé par la méthode des moindres carrés :

$$\mathbf{u}_1 = b_1 \mathbf{t}_1 + \mathbf{r}_1 \tag{2-3}$$

en minimisant le vecteur résiduel $\mathbf{r}_1$.

A la seconde itération, on applique le même processus aux matrices résiduelles, $\mathbf{E}_1$, $\mathbf{F}_1$. De manière générale à l'itération $f$+1, les matrices considérées sont :

$$\mathbf{X}_{f+1} = \mathbf{X}_f - \mathbf{t}_f \mathbf{p}_f^{T} \tag{3-1}$$

$$\mathbf{Y}_{f+1} = \mathbf{Y}_f - \mathbf{u}_f \mathbf{q}_f^{T} \tag{3-2}$$

On obtient en définitive, de proche en proche, au bout de $F$ itérations :

$$\mathbf{X} = \mathbf{TP}^{\mathrm{T}} + \mathbf{E} \tag{4-1}$$

$$\mathbf{Y} = \mathbf{UQ}^{\mathrm{T}} + \mathbf{F} \tag{4-2}$$

où $\mathbf{T}=(\mathbf{t}_1,...,\mathbf{t}_F)$ et $\mathbf{U}=(\mathbf{u}_1,...\mathbf{u}_F)$ sont respectivement les matrices des cotes, $\mathbf{P}=(\mathbf{p}_1,...,\mathbf{p}_F)$ et $\mathbf{Q}=(\mathbf{q}_1,...,\mathbf{q}_F)$ sont les matrices des charges (encore dénommées matrices de pondération), et **E,F** sont des matrices résiduelles.

La méthode PLS a été généralisée en utilisant des tenseurs à la place de matrices pour décrire les variables d'entrée et de sortie du modèle. On rappelle qu'un vecteur et une matrice sont des cas particuliers de tenseurs respectivement d'ordre 1 et 2. La variable d'entrée est notée $\underline{\mathbf{X}} \in \mathbb{R}^{I_1 \times ... \times I_n}$ où $n$ est l'ordre du tenseur et $I_i$ est la dimension du mode i. Les modes peuvent être par exemple le temps (nombre d'échantillons dans le temps, la fréquence (nombre de bandes spectrales d'analyse), l'espace (nombre d'électrodes). La méthode PLS ainsi généralisée est dénommée méthode PLS multivariée ou NPLS (*N-way PLS*). On en trouvera une description détaillée dans la thèse de R. Bro intitulée « Multi-way analysis in the food industry : models, algorithms and applications », 1998. La méthode PLS multivariée a été appliquée au calcul du modèle prédictif des trajectoires dans une interface BCI comme décrit dans l'article de A. Eliseyev et T. Aksenova intitulé « Recursive N-Way Partial Least Squares for Brain-Computer Interface » publié dans PLOS One, Juillet 2013, vol. 8, n° 7, e69962 et dans la demande internationale WO-A-2013/057544. Selon cette méthode, le modèle prédictif est construit de manière itérative, en projetant les tenseurs (en lieu et place des matrices) sur les espaces de variables latentes, soit en transposant les expressions (4-1) et (4-2) :

$$\underline{\mathbf{X}} = \sum_{f=1}^{F} \mathbf{t}_f \circ \mathbf{w}_1^f \circ ... \circ \mathbf{w}_n^f + \underline{\mathbf{E}} \tag{5-1}$$

$$\underline{\mathbf{Y}} = \sum_{f=1}^{F} \mathbf{u}_f \circ \mathbf{q}_1^f \circ ... \circ \mathbf{q}_n^f + \underline{\mathbf{F}} \qquad (5\text{-}2)$$

où $\circ$ est le produit tensoriel, et $\mathbf{t}_f$ et $\mathbf{u}_f$ sont liés par la relation de régression :

$$\mathbf{u}_f = \mathbf{T}_f \mathbf{B}_f \qquad (6)$$

où $\mathbf{T}_f = (\mathbf{t}_1, ..., \mathbf{t}_f) \in \mathbb{R}^{N \times f}$ et $\mathbf{U}_f = (\mathbf{u}_1, ..., \mathbf{u}_f) \in \mathbb{R}^{N \times f}$ sont respectivement les matrices des cotes à l'itération $f=1,..., F$, $\mathbf{B}_f$ est la matrice des coefficients de régression et où $\mathbf{w}_i^f \in \mathbb{R}^{I_i}$, $\mathbf{q}_j^f \in \mathbb{R}^{J_j}$ sont les vecteurs de pondération de norme égale à 1 et où $\underline{\mathbf{E}}$, $\underline{\mathbf{F}}$ sont des tenseurs résiduels.

Là encore on passe d'une itération à l'autre au moyen de :

$$\underline{\mathbf{X}}_{f+1} = \underline{\mathbf{X}}_f - \sum_{f=1}^{F} \mathbf{t}_f \circ \mathbf{w}_1^f \circ ... \circ \mathbf{w}_n^f \qquad (7\text{-}1)$$

$$\underline{\mathbf{Y}}_{f+1} = \underline{\mathbf{Y}}_f - \sum_{f=1}^{F} \mathbf{u}_f \circ \mathbf{q}_1^f \circ ... \circ \mathbf{q}_n^f \qquad (7\text{-}2)$$

L'étape de calibration fournit en définitive les vecteurs de pondération $\mathbf{w}_i^f \in \mathbb{R}^{I_i}$, $\mathbf{q}_j^f \in \mathbb{R}^{J_j}$, $i=1..,n, f=1,..,F$ et les matrices $\mathbf{B}_f$, $f=1,..,F$.

Lorsque l'interface BCI est ensuite en opération, la matrice $\mathbf{X}$ des signaux électro-physiologiques mesurés est projetée sur l'espace des variables latentes à l'aide des vecteurs de pondération $\mathbf{w}_i^f$ pour en déduire la matrice de cotes $\mathbf{T}_F$. On en déduit la matrice de cotes $\mathbf{U}_F$ au moyen de l'équation de régression, puis l'estimation $\hat{\mathbf{Y}}$ de $\mathbf{Y}$ à partir des vecteurs de pondération $\mathbf{q}_j^f$ (cf. expression 5-2).

En pratique, les méthodes PLS et NPLS ne peuvent s'appliquer telles quelles sur les données d'observation obtenues pendant l'étape d'apprentissage. Tout d'abord, il est nécessaire d'effectuer un prétraitement de ces données, tel qu'une analyse temps-fréquence sur une fenêtre temporelle glissante. Ensuite, comme expliqué dans la demande internationale précitée, il est préférable d'utiliser un terme de pénalisation dans l'équation de régression de manière à améliorer la robustesse de la prédiction et à accroître la rareté des coefficients non nuls (*sparsity*) dans les vecteurs de pondération $\mathbf{w}_i^f$. En particulier, lorsque le mode est le mode spatial (électrodes), la rareté des coefficients dans ce mode permet de sélectionner seulement les électrodes pertinentes pour la prédiction de la trajectoire.

Si la méthode NPLS permet d'améliorer le calcul du modèle prédictif lors de la phase de calibration d'une interface BCI, il n'en demeure pas moins que des artefacts temporels subsistent. Ces artefacts sont des discontinuités de la trajectoire prédite et/ou des à-coups du mouvement sur cette trajectoire, ce qui est préjudiciable à certaines applications notamment lorsque l'interface BCI commande un exosquelette.

Le but de la présente invention est par conséquent de proposer une méthode de calibration d'une interface BCI et plus précisément de son modèle prédictif, qui permette d'obtenir une trajectoire prédite plus lisse que dans l'état de la technique et sans à-coups.

## EXPOSÉ DE L'INVENTION

La présente invention est définie par une méthode de calibration d'une interface neuronale directe destinée à recevoir une pluralité de signaux électro-physiologiques acquis au moyen d'une pluralité de capteurs pendant une pluralité de fenêtres d'observation associés à des instants d'observation et à fournir des signaux de commande décrivant une trajectoire à réaliser par un ordinateur ou une machine, lesdits signaux électro-physiologiques faisant l'objet d'un prétraitement pour obtenir un tenseur $\underline{\mathbf{X}}$ de variables d'entrée représentatif desdits signaux électro-physiologiques, ladite trajectoire étant représentée par un tenseur $\underline{\mathbf{Y}}$ de variables de sortie, l'interface neuronale directe utilisant un modèle prédictif linéaire pour estimer le tenseur de variables de sortie $\underline{\mathbf{Y}}$ à partir du tenseur de variables d'entrée $\underline{\mathbf{X}}$, dans laquelle :

on étend le tenseur $\underline{\mathbf{X}}$ pour obtenir un tenseur des variables d'entrée étendu $(\widetilde{\underline{\mathbf{X}}}^{(s)}, \widetilde{\underline{\mathbf{X}}}^{P}, \widetilde{\underline{\mathbf{X}}}^{comb})$ par concaténation, du tenseur $\underline{\mathbf{X}}$ et d'un second tenseur comprenant au moins une dérivée d'ordre (s) de $\underline{\mathbf{X}}$ selon l'instant d'observation et/ou une différence entre le tenseur $\underline{\mathbf{X}}$ et un tenseur $\underline{\breve{\mathbf{X}}}$ dont les composantes sont obtenues à partir d'une interpolation polynomiale des composantes de $\underline{\mathbf{X}}$ selon les instants d'observation;

on étend le tenseur $\underline{\mathbf{Y}}$ par un tenseur nul selon le mode des instants d'observation pour obtenir un tenseur de variables de sortie étendu $\widetilde{\underline{\mathbf{Y}}}$ ;

on effectue une régression multivariée des moindres carrés partiels (NPLS) entre le tenseur des variables de sortie étendu $\widetilde{\underline{\mathbf{Y}}}$ et le tenseur des variables d'entrée étendu ;

le modèle prédictif linéaire est paramétré au moyen des matrices de cotes ($\mathbf{B}_f$, $f=1,..,F$) et des vecteurs de pondération ($\mathbf{w}_i^f$, $\mathbf{q}_j^f$, $f = 1,..,F$) fournis par ladite régression multivariée.

Selon un premier mode de réalisation, le tenseur étendu des variables d'entrée est formé par

$$\widetilde{\underline{\mathbf{X}}}^{(s)} = \begin{bmatrix} \underline{\mathbf{X}} \\ \sqrt{\lambda}\,\underline{\mathbf{X}}^{(s)} \end{bmatrix}$$

où $\lambda$ est un réel positif non nul et $\underline{\mathbf{X}}^{(s)}$ est la dérivée d'ordre $s$ du tenseur $\underline{\mathbf{X}}$ par rapport à l'instant d'observation.

Selon un second mode de réalisation, le tenseur étendu des variables d'entrée est formé par

$$\widetilde{\underline{\mathbf{X}}}^{P} = \begin{bmatrix} \underline{\mathbf{X}} \\ \sqrt{\mu}\left(\underline{\mathbf{X}} - \underline{\breve{\mathbf{X}}}\right) \end{bmatrix}$$

où $\mu$ est un réel positif non nul et $\underline{\breve{\mathbf{X}}}$ est un tenseur ayant pour composantes des valeurs polynomiales $P_{x_{i-l},...,x_{i+l}}(x)$ où $x$ représente la composante correspondante du tenseur $\underline{\mathbf{X}}$ et $P_{x_{i-l},...,x_{i+l}}(.)$ est un polynôme d'un degré $p$ prédéterminé fournissant la meilleure approximation des composantes $x_{i-l},...,x_{i+l}$ en différents instants d'observation.

Selon un troisième mode de réalisation, le tenseur étendu des variables d'entrée est donné par

$$\widetilde{\underline{\mathbf{X}}}^{comb} = \begin{bmatrix} \underline{\mathbf{X}} \\ \sqrt{\lambda}\,\underline{\mathbf{X}}^{(s)} \\ \sqrt{\mu}\left(\underline{\mathbf{X}} - \underline{\breve{\mathbf{X}}}\right) \end{bmatrix}$$

où $\lambda, \mu$ sont des réels positifs non nuls, $\underline{\mathbf{X}}^{(s)}$ est la dérivée d'ordre $s$ du tenseur $\underline{\mathbf{X}}$ par rapport à l'instant d'observation, $\underline{\breve{\mathbf{X}}}$ est un tenseur ayant pour composantes des valeurs polynomiales $P_{x_{i-l},...,x_{i+l}}(x)$ où $x$ représente la composante correspondante du tenseur $\underline{\mathbf{X}}$ et $P_{x_{i-l},...,x_{i+l}}(.)$ est un polynôme d'un degré $p$ prédéterminé fournissant la meilleure approximation des valeurs $x_{i-l},...,x_{i+l}$ en différents instants d'observation.

Quel que soit le mode de réalisation, le tenseur des variables d'entrée est de préférence d'ordre 4, le premier mode du tenseur correspondant aux instants d'observation, le second mode correspondant aux différents capteurs, le troisième mode correspondant au temps au sein une fenêtre d'observation, le quatrième correspond à une bande de fréquence dans une décomposition temps-fréquence au sein d'une fenêtre d'observation.

Avantageusement, ledit prétraitement comprend une étape de soustraction d'une moyenne d'ensemble à chacun des signaux électro-physiologiques et à effectuer une décomposition par ondelettes des signaux ainsi obtenus sur chacune des fenêtres d'observation.

Les signaux électro-physiologiques peuvent être typiquement des signaux ECoG.

## BRÈVE DESCRIPTION DES DESSINS

D'autres caractéristiques et avantages de l'invention apparaîtront à la lecture d'un mode de réalisation préférentiel de l'invention, en faisant référence aux figures jointes parmi lesquelles :

La Fig. 1 représente schématiquement une méthode de calibration d'une interface neuronale directe selon un premier mode de réalisation de l'invention ;

La Fig. 2 représente schématiquement une méthode de calibration d'une interface neuronale directe selon un second mode de réalisation de l'invention.

## EXPOSÉ DÉTAILLÉ DE MODES DE RÉALISATION PARTICULIERS

Nous nous placerons dans la suite dans le cas d'une interface neuronale directe, et considérerons plus particulièrement la phase de calibration (ou de manière équivalente d'apprentissage) d'une telle interface. Le système d'acquisition des signaux électro-physiologiques peut être un système ECoG ou un système ECG. En tout état de cause la phase de calibration est postérieure à la mise en place des électrodes.

Nous supposerons comme précédemment que, pendant la phase de calibration, le sujet imagine, observe ou réalise un mouvement selon une trajectoire prédéterminée ou enregistrée pendant un intervalle donné. Les signaux électro-physiologiques acquis par l'interface pendant la phase de calibration font l'objet d'un prétraitement avant d'être utilisés pour l'estimation des paramètres du modèle prédictif

Ce prétraitement peut notamment comporter la soustraction d'une moyenne prise sur l'ensemble des signaux mesurés. Ainsi, si l'on note $x_i(t_k)$ le signal électro-physiologique acquis par l'électrode $i=1,...,n$ au temps $t_k$, on soustrait la moyenne commune sur chacun des signaux, soit :

$$x_i(t_k) = x_i(t_k) - \sum_{i=1}^{n} x_i(t_k) \tag{8}$$

On effectue ensuite une analyse temps-fréquence des signaux ainsi obtenus. Cette analyse est réalisée sur une fenêtre d'observation glissante de largeur $\Delta T$ pour toutes les électrodes. L'analyse temps-fréquence est avantageusement une décomposition en ondelettes. On peut calculer la valeur absolue ou la valeur quadratique des coefficients obtenus par l'analyse temps-fréquence et les valeurs obtenues (éventuellement en échelle logarithmique) peuvent en outre faire l'objet d'un lissage fréquentiel ou d'une interpolation (calcul d'enveloppe).

Ainsi, à chaque fenêtre d'observation est associé un tenseur d'ordre 3 de variables d'observation, d'où la génération d'un tenseur d'ordre 4 : Le premier mode correspond aux fenêtres d'observation successives, le second mode correspond à l'espace, autrement dit aux capteurs, le troisième mode correspond au temps, autrement dit au nombre d'échantillons successifs au sein d'une fenêtre d'observation, et le quatrième mode correspond à la fréquence, autrement dit au nombre de bandes de fréquence utilisées pour la décomposition en ondelettes sur une fenêtre d'observation. De manière plus générale, un ordre supérieur à 4 pourra être utilisé. Réciproquement un ordre inférieur à 4 pourra être utilisé pour un fonctionnement simplifié ou dégradé, en abandonnant le mode fréquentiel ou temporel par exemple. Dans tous les cas, le premier mode est celui relatif aux instants d'observation (*epochs*), c'est-à-dire celui des fenêtres d'observation. Le tenseur des variables d'entrée est noté **X** comme précédemment.

De la même façon, la trajectoire imaginée, observée ou réalisée peut être décrite de manière générale au moyen d'un tenseur de variables de sortie. Par exemple, ce tenseur peut correspondre aux commandes d'un robot multi-axe dans le cas d'un exosquelette. Le tenseur de variables de sortie est noté **Y** comme précédemment.

La phase de calibration vise à obtenir les paramètres d'un modèle prédictif linéaire permettant de prédire le tenseur de variables de sortie à partie du tenseur de variables d'entrée.

L'idée à la base de l'invention est d'utiliser dans la méthode de régression PLS multivariée (ou NPLS), un terme de pénalisation fonction d'au moins une dérivée des variables d'entrée et/ou d'une expression polynomiale de ces mêmes variables.

Pour simplifier la présentation, nous nous placerons d'abord dans le cas matriciel représenté par l'expression (1). L'optimisation des paramètres du modèle prédictif linéaire revient dans ce cas à rechercher la matrice $\mathbf{B}_{opt}$ telle que :

$$\mathbf{B}_{opt} = \arg\min \left\| \mathbf{Y} - \mathbf{BX} \right\|_F \tag{9}$$

où $\|\mathbf{A}\|_F$ représente la norme de Frobenius de la matrice **A**, **X** et **Y** respectivement les matrices des variables d'entrée et de sortie. L'homme du métier comprendra que dans la phase d'opération de l'interface BCI, la prédiction de la trajectoire est ensuite effectuée au moyen de :

$$\widehat{\mathbf{Y}} = \mathbf{B}_{opt} \mathbf{X} \tag{10}$$

où $\widehat{\mathbf{Y}}$ représente les variables de la trajectoire prédite.

L'idée à la base de l'invention est d'utiliser un terme de pénalisation dans le calcul d'optimisation.

Selon un premier mode de réalisation, le terme de pénalisation dépend d'au moins une dérivée des variables d'entrée. L'optimisation vise alors à rechercher la matrice $\mathbf{B}_{opt}^{Ws}$ telle que :

$$\mathbf{B}_{opt}^{Ws} = \arg\min_{\mathbf{B}} \left( \left\| \mathbf{Y} - \mathbf{B}\mathbf{X} \right\|_F + \lambda \left\| \mathbf{X}^{(s)} \right\|_F \right) \qquad (11)$$

où $\lambda$ est un réel strictement positif et $\mathbf{X}^{(s)}$ est la matrice dérivée d'ordre $s$ par rapport au temps de la matrice $\mathbf{X}$ (autrement dit dont les éléments sont constitués par la dérivée d'ordre $s$ par rapport au temps des éléments de $\mathbf{X}$). L'expression (11) peut être réécrite de manière équivalente sous la forme :

$$\mathbf{B}_{opt}^{Ws} = \arg\min_{\mathbf{B}} \left( \left\| \widetilde{\mathbf{Y}}^s - \mathbf{B}\widetilde{\mathbf{X}}^{(s)} \right\|_F \right) \qquad (12)$$

où les matrices $\widetilde{\mathbf{X}}^{(s)}$ et $\widetilde{\mathbf{Y}}^s$ sont définies par $\widetilde{\mathbf{X}}^{(s)} = \begin{bmatrix} \mathbf{X} \\ \sqrt{\lambda}\mathbf{X}^{(s)} \end{bmatrix}$ et $\widetilde{\mathbf{Y}}^s = \begin{bmatrix} \mathbf{Y} \\ \mathbf{0}^s \end{bmatrix}$. La dimension du premier mode de la matrice nulle $\mathbf{0}^s$ est égale à $N\text{-}s$.

Selon un second mode de réalisation, le terme de pénalisation dépend d'une expression polynomiale des variables d'entrée.

L'optimisation vise alors à rechercher la matrice $\mathbf{B}_{opt}^{P}$ telle que :

$$\mathbf{B}_{opt}^{P} = \arg\min_{\mathbf{B}} \left( \left\| \mathbf{Y} - \mathbf{B}\mathbf{X} \right\|_F + \mu \sum_{i=l+1}^{N-l} \left\| g_{p,l}(\mathbf{x}_i, \mathbf{B}) \right\|_F \right) \qquad (13)$$

où $\mu$ est un réel strictement positif et $g_{p,l}(\mathbf{x}_i, \mathbf{B})$ est une expression polynomiale des variables d'entrée relatives aux instants d'observation $i\text{-}l,...,i,...,i\text{+}l$ définie par :

$$g_{p,l}(\mathbf{x}_i, \mathbf{B}) = \mathbf{B}\mathbf{x}_i - \mathbf{B} \begin{pmatrix} P_{x_{i-l}^1,...,x_{i+l}^1}(x_i^1) \\ P_{x_{i-l}^2,...,x_{i+l}^2}(x_i^2) \\ \vdots \\ P_{x_{i-l}^n,...,x_{i+l}^n}(x_i^n) \end{pmatrix} = \mathbf{B}\mathbf{x}_i - \mathbf{B}\breve{\mathbf{x}}_i \qquad (14)$$

avec $\mathbf{X} = (\mathbf{x}_1,..,\mathbf{x}_N)$, $\mathbf{x}_i = \left( x_i^1,...,x_i^n \right)^T$ et $P_{x_{i-l},...,x_{i+l}}(x)$ un polynôme de degré $p$ qui fournit la meilleure approximation des valeurs $x_{i-l},...,x_{i+l}$ au sens des moindres carrés et $\breve{\mathbf{x}}_i = \left( P_{x_{i-l}^1,...,x_{i+l}^1}\left( x_i^1 \right),...,P_{x_{i-l}^n,...,x_{i+l}^n}\left( x_i^n \right) \right)^T$. On comprendra que le terme de pénalisation représenté par l'expression (14), vise à s'écarter au minimum d'une prédiction obtenue sur la base d'une interpolation polynomiale des variables d'entrée entre différents instants d'observation.

L'expression (14) peut être réécrite de manière équivalente sous la forme :

$$\mathbf{B}_{opt}^{P} = \arg\min_{\mathbf{B}} \left( \left\| \mathbf{Y} - \mathbf{B}\mathbf{X} \right\|_F + \mu \left\| \mathbf{B}\mathbf{X} - \mathbf{B}\breve{\mathbf{X}} \right\|_F \right) \qquad (15)$$

$$\mathbf{B}_{opt}^{P} = \arg \min_{\mathbf{B}} \left( \left\| \widetilde{\mathbf{Y}} - \mathbf{B}\widetilde{\mathbf{X}}^{P} \right\|_{F} \right) \tag{16}$$

avec ici $\widetilde{\mathbf{X}}^{P} = \begin{bmatrix} \mathbf{X} \\ \sqrt{\mu}\left(\mathbf{X} - \breve{\mathbf{X}}\right) \end{bmatrix}$, $\breve{\mathbf{X}} = \left(\breve{\mathbf{x}}_{l+1}, .., \breve{\mathbf{x}}_{N-l}\right)$ et $\widetilde{\mathbf{Y}}^{P} = \begin{bmatrix} \mathbf{Y} \\ \mathbf{0}^{P} \end{bmatrix}$. La dimension du premier mode de la matrice $\mathbf{0}^{P}$ est égale à $N$-2$l$. Le nombre d'instants d'observation (ou, de manière équivalent de fenêtres d'observation) est choisi supérieur à 2$l$.

Selon un troisième mode de réalisation, l'optimisation est réalisée sur la base d'une combinaison des critères (11) et (14), autrement dit elle vise à rechercher la matrice $\mathbf{B}_{opt}$ telle que :

$$\mathbf{B}_{opt}^{comb} = \arg \min_{\mathbf{B}} \left( \left\| \mathbf{Y} - \mathbf{B}\mathbf{X} \right\|_{F} + \lambda \left\| \mathbf{X}^{(s)} \right\|_{F} + \mu \left\| \mathbf{B}\left(\mathbf{X} - \breve{\mathbf{X}}\right) \right\|_{F} \right) \tag{17}$$

où $\lambda$ et $\mu$ sont des réels strictement positifs.

Cette optimisation est équivalente à la recherche de la matrice $\mathbf{B}_{opt}^{comb}$ telle que :

$$\mathbf{B}_{opt}^{comb} = \arg \min_{\mathbf{B}} \left( \left\| \widetilde{\mathbf{Y}}^{comb} - \mathbf{B}\widetilde{\mathbf{X}}^{comb} \right\|_{F} \right) \tag{18}$$

$$\widetilde{\mathbf{X}}^{comb} = \begin{bmatrix} \mathbf{X} \\ \sqrt{\lambda}\mathbf{X}^{(s)} \\ \sqrt{\mu}\left(\mathbf{X} - \breve{\mathbf{X}}\right) \end{bmatrix}, \quad \widetilde{\mathbf{Y}}^{comb} = \begin{bmatrix} \mathbf{Y} \\ \mathbf{0}^{s} \\ \mathbf{0}^{P} \end{bmatrix}.$$

où $\widetilde{\mathbf{X}}^{comb}$ est défini par

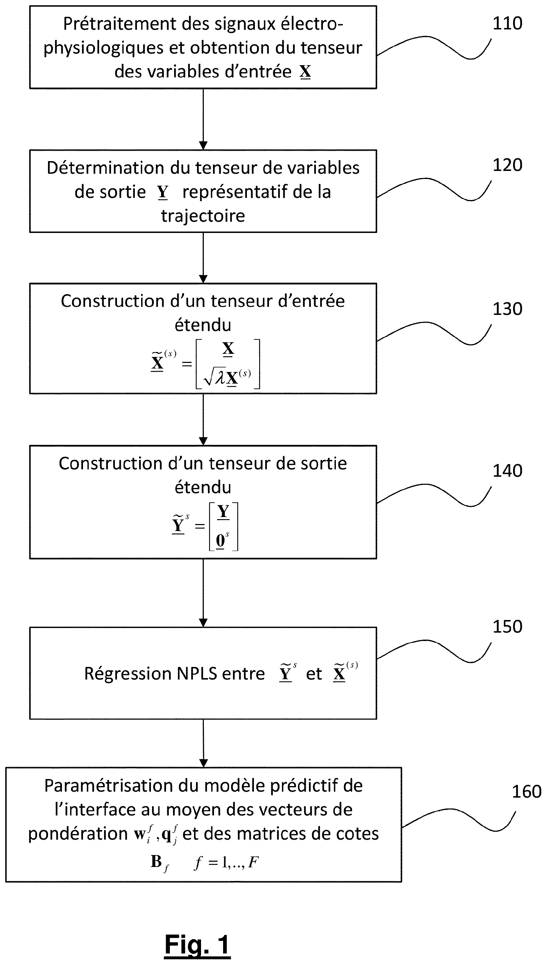

La Fig. 1 représente l'ordinogramme d'une méthode de calibration d'une interface BCI selon un premier mode de réalisation de l'invention.

On suppose que le sujet connecté aux capteurs de l'interface BCI imagine, observe ou réalise un mouvement selon au moins une trajectoire.

A l'étape 110, les signaux électro-physiologiques sont acquis par les différents capteurs pendant des fenêtres observation successives et font l'objet d'un prétraitement pour obtenir un tenseur $\underline{\mathbf{X}}$ de variables d'entrée représentatif de ces signaux. L'ordre du tenseur est noté n, le premier mode du tenseur étant celui des instants d'observation (ou, de manière équivalente, des fenêtres d'observation). Comme indiqué plus haut, le prétraitement peut comporter la soustraction d'une moyenne commune et une analyse temps-fréquence au sein de chaque fenêtre.

A l'étape 120, on détermine un tenseur de variables de sortie, $\underline{\mathbf{Y}}$, représentatif de la trajectoire considérée. L'ordre du tenseur est noté $m$. Là encore, le premier mode correspond aux instants d'observation.

A l'étape 130, on construit un tenseur étendu, $\underline{\widetilde{\mathbf{X}}}^{(s)}$, de même ordre n que le tenseur $\underline{\mathbf{X}}$, par concaténation du tenseur $\underline{\mathbf{X}}$ et du tenseur $\sqrt{\lambda}\underline{\mathbf{X}}^{(s)}$, noté symboliquement $\underline{\widetilde{\mathbf{X}}}^{(s)} = \begin{bmatrix} \underline{\mathbf{X}} \\ \sqrt{\lambda}\underline{\mathbf{X}}^{(s)} \end{bmatrix}$ où $\mathbf{X}^{(s)}$ est la dérivée d'ordre $s$ de $\underline{\mathbf{X}}$ par rapport à l'instant d'observation (par exemple instant auquel commence la fenêtre d'observation) et $\lambda$ est un réel strictement positif. En d'autres termes, à chaque composante de $\underline{\mathbf{X}}$ en un instant d'observation, est concaténée la dérivée de cette composante en ce même instant, multipliée par le facteur $\sqrt{\lambda}$. Le tenseur ainsi étendu $\underline{\mathbf{X}}^{(s)}$ présente selon le premier mode une dimension égale à 2$N$-$s$ où $N$ est la dimension de $\underline{\mathbf{X}}$ selon le premier mode.

A l'étape 140, on construit un tenseur étendu $\underline{\widetilde{\mathbf{Y}}}^{s}$, de même ordre $m$ que $\underline{\mathbf{Y}}$, obtenu par concaténation de $\underline{\mathbf{Y}}$ et du tenseur nul, noté symboliquement $\underline{\widetilde{\mathbf{Y}}}^{s} = \begin{bmatrix} \underline{\mathbf{Y}} \\ \underline{\mathbf{0}}^{s} \end{bmatrix}.$ En d'autres termes, à chaque composante de $\underline{\mathbf{Y}}$ en un instant d'observation est concaténée une composante nulle. Selon le premier mode (temps d'observation), le tenseur étendu $\tilde{\mathbf{Y}}^s$ présente une dimension égale à 2$N$-$s$ selon le premier mode.

On applique ensuite l'algorithme NPLS aux tenseurs étendus $\underline{\tilde{\mathbf{X}}}^{(s)}$ et $\underline{\tilde{\mathbf{Y}}}^s$. Autrement dit, à chaque itération $f$ = 1,...,$F$ on projette en 150 sur l'espace des variables latentes les tenseurs résiduels $\underline{\tilde{\mathbf{X}}}_f^{(s)}$ et $\underline{\tilde{\mathbf{Y}}}_f^s$. On en déduit en 160 les vecteurs de pondération $\mathbf{w}_i^f$, $\mathbf{q}_j^f$, $i$=1..,$n$+1, $j$=1..,$n$+1 et la matrice de cotes $\mathbf{B}_f$.

A l'issue d'un nombre $F$ d'itérations, le modèle prédictif linéaire est paramétré au moyen des vecteurs de pondération et des matrices de cotes $\mathbf{w}_i^f$, $\mathbf{q}_j^f$, $\mathbf{B}_f$ avec $f$ = 1,..,$F$.

Une fois l'interface BCI paramétrée, le tenseur $\underline{\mathbf{X}}$ des variables d'entrée représentatives des signaux électro-physiologiques mesurés est d'abord étendu pour obtenir le tenseur $\underline{\tilde{\mathbf{X}}}^{(s)}$ puis projeté sur l'espace des variables latentes à l'aide des vecteurs de pondération $\mathbf{w}_i^f$ pour en déduire la matrice de cotes $\mathbf{T}_F$. On obtient ensuite la matrice de cotes $\mathbf{U}_F$ au moyen de l'équation de régression, puis l'estimation $\hat{\underline{\mathbf{Y}}}$ de $\underline{\mathbf{Y}}$ à partir des vecteurs de pondération $\mathbf{q}_j^f$.

La méthode de calibration selon le premier mode de réalisation permet d'obtenir des trajectoires plus lisses que dans l'art antérieur.

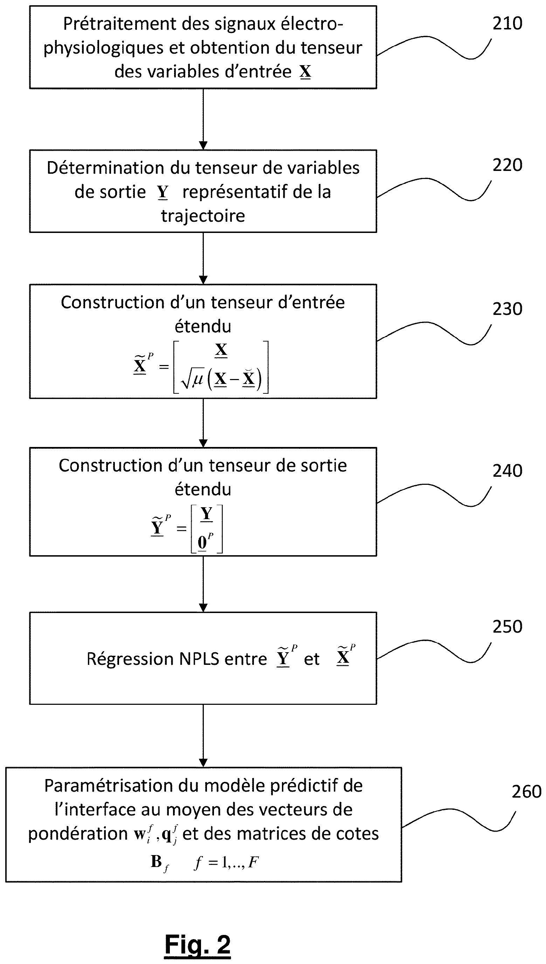

La Fig. 2 représente l'ordinogramme d'une méthode de calibration d'une interface BCI selon un second mode de réalisation de l'invention.

On suppose à nouveau que le sujet connecté aux capteurs de l'interface BCI imagine, observe ou réalise un mouvement selon au moins une trajectoire.

Les étapes 210 et 220 sont respectivement identiques aux étapes 110 et 120 précédemment décrites.

A l'étape 230, on construit un tenseur étendu, $\underline{\tilde{\mathbf{X}}}^P$, de même ordre $n$ que le tenseur $\underline{\mathbf{X}}$, par concaténation du tenseur $\underline{\mathbf{X}}$ et du tenseur $\sqrt{\mu}\left(\underline{\mathbf{X}} - \underline{\breve{\mathbf{X}}}\right)$, noté symboliquement

$$\underline{\tilde{\mathbf{X}}}^P = \begin{bmatrix} \underline{\mathbf{X}} \\ \sqrt{\mu}\left(\underline{\mathbf{X}} - \underline{\breve{\mathbf{X}}}\right) \end{bmatrix},$$

où $\underline{\breve{\mathbf{X}}}$ est le tenseur obtenu par interpolation polynomiale des composantes du tenseur $\underline{\mathbf{X}}$ selon le premier mode (mode des instants d'observations) au moyen du polynôme $P_{x_{i-l},...,x_{i+l}}(x)$. En d'autres termes, à chaque composante $x_i$ du tenseur $\underline{\mathbf{X}}$ à l'instant d'observation $i$ on concatène la composante $\sqrt{\mu}\left(x_i - P_{x_{i-l},...,x_{i+l}}(x_i)\right)$. La dimension du tenseur étendu, $\underline{\tilde{\mathbf{X}}}^P$, selon le premier mode est égale à $N+(N-2l)=2N-2l$ où $N$ est la dimension du tenseur $\underline{\mathbf{X}}$ selon ce même mode.

A l'étape 240, on construit un tenseur étendu $\underline{\tilde{\mathbf{Y}}}^P$, de même ordre $m$ que $\underline{\mathbf{Y}}$, obtenu par concaténation de $\underline{\mathbf{Y}}$ et du tenseur nul, noté symboliquement

$$\underline{\tilde{\mathbf{Y}}}^P = \begin{bmatrix} \underline{\mathbf{Y}} \\ \underline{\mathbf{0}}^P \end{bmatrix}.$$

En d'autres termes, à chaque composante de $\underline{\mathbf{Y}}$ en un instant d'observation est concaténée une composante nulle. Selon le premier mode (temps d'observation), le tenseur étendu $\tilde{\mathbf{Y}}^P$ présente une dimension égale à 2$N$-2$l$ selon le premier mode.

On applique ensuite l'algorithme NPLS aux tenseurs étendus $\underline{\tilde{\mathbf{X}}}^P$ et $\underline{\tilde{\mathbf{Y}}}^P$. Autrement dit, à chaque itération $f$ = 1,...,$F$ on projette en 250 sur l'espace des variables latentes les tenseurs résiduels $\underline{\tilde{\mathbf{X}}}_f^P$ et $\underline{\tilde{\mathbf{Y}}}_f^P$. On en déduit en 260 les vecteurs de pondération $\mathbf{w}_i^f$, $\mathbf{q}_j^f$, $i$ = 1..,$n$+1, $j$ = 1..,$n$+1 et la matrice de cotes $\mathbf{B}_f$.

A l'issue d'un nombre $F$ d'itérations, le modèle prédictif linéaire est paramétré au moyen des vecteurs de pondération et des matrices de cotes $\mathbf{w}_i^f$, $\mathbf{q}_j^f$, $\mathbf{B}_f$ avec $f$ = 1,..,$F$.

Une fois l'interface BCI paramétrée, le tenseur $\underline{\mathbf{X}}$ des variables d'entrée représentatif des signaux électro-physiologiques mesurés est d'abord étendu pour obtenir le tenseur $\underline{\tilde{\mathbf{X}}}^P$, puis projeté sur l'espace des variables latentes à l'aide des vecteurs de pondération $\mathbf{w}_i^f$ pour en déduire la matrice de cotes $\mathbf{T}_F$. On obtient ensuite la matrice de cotes

$\mathbf{U}_F$ au moyen de l'équation de régression, puis l'estimation $\hat{\mathbf{Y}}$ de $\underline{\mathbf{Y}}$ à partir des vecteurs de pondération $\mathbf{q}_j^f$ .

La méthode de calibration selon le second mode de réalisation permet de réduire les artefacts temporels de prédiction de la trajectoire dus au bruit affectant les signaux d'entrée.

L'homme du métier comprendra de manière générale que, comme dans le cas particulier matriciel, les deux

$$\widetilde{\underline{\mathbf{X}}}^{comb} = \begin{bmatrix} \underline{\mathbf{X}} \\ \sqrt{\lambda}\,\underline{\mathbf{X}}^{(s)} \\ \sqrt{\mu}\left(\underline{\mathbf{X}} - \underline{\breve{\mathbf{X}}}\right) \end{bmatrix}.$$

modes de réalisation peuvent être combinés en construisant un tenseur étendu On obtient alors le bénéfice combiné des deux modes de réalisation précédemment décrits. L'homme du métier comprendra en outre que la méthode d'apprentissage pourra se poursuivre au-delà d'une phase de calibration préalable, en mettant à jour les paramètres du modèle prédictif de manière adaptative au moyen d'une rétroaction fonction de l'écart entre la trajectoire prédite et la trajectoire observée au cours de l'opération de l'interface BCI.

## Revendications

1. Méthode de calibration d'une interface neuronale directe destinée à recevoir une pluralité de signaux électro-physiologiques acquis au moyen d'une pluralité de capteurs pendant une pluralité de fenêtres d'observation associés à des instants d'observation et à fournir des signaux de commande décrivant une trajectoire à réaliser par un ordinateur ou une machine, lesdits signaux électro-physiologiques faisant l'objet d'un prétraitement (110,210) pour obtenir un tenseur $\underline{\mathbf{X}}$ de variables d'entrée représentatif desdits signaux électro-physiologiques, ladite trajectoire étant représentée (120,220) par un tenseur $\underline{\mathbf{Y}}$ de variables de sortie, l'interface neuronale directe utilisant un modèle prédictif linéaire pour estimer le tenseur de variables de sortie $\underline{\mathbf{Y}}$ à partir du tenseur de variables d'entrée $\underline{\mathbf{X}}$, **caractérisée en ce que** :

   on étend (130,230) le tenseur $\underline{\mathbf{X}}$ pour obtenir un tenseur des variables d'entrée étendu ($\widetilde{\underline{\mathbf{X}}}^{(s)}, \widetilde{\underline{\mathbf{X}}}^P, \widetilde{\underline{\mathbf{X}}}^{comb}$) par concaténation, du tenseur $\underline{\mathbf{X}}$ et d'un second tenseur comprenant au moins une dérivée d'ordre (s) de $\underline{\mathbf{X}}$ selon l'instant d'observation et/ou une différence entre le tenseur $\underline{\mathbf{X}}$ et un tenseur $\underline{\breve{\mathbf{X}}}$ dont les composantes sont obtenues à partir d'une interpolation polynomiale des composantes de $\underline{\mathbf{X}}$ selon les instants d'observation;
   on étend le tenseur $\underline{\mathbf{Y}}$ (140,240) par un tenseur nul selon le mode des instants d'observation pour obtenir un tenseur de variables de sortie étendu $\widetilde{\underline{\mathbf{Y}}}$ ;
   on effectue une régression multivariée (150,250) des moindres carrés partiels (NPLS) entre le tenseur des variables de sortie étendu $\widetilde{\underline{\mathbf{Y}}}$ et le tenseur des variables d'entrée étendu ;
   le modèle prédictif linéaire est paramétré (160,260) au moyen des matrices de cotes ($\mathbf{B}_f$, $f = 1,.., F$) et des vecteurs de pondération ( $\mathbf{w}_i^f$ , $\mathbf{q}_j^f$ , $f = 1,..,F$) fournis par ladite régression multivariée.

2. Méthode de calibration d'une interface neuronale directe selon la revendication 1, **caractérisée en ce que** le tenseur

   $$\widetilde{\underline{\mathbf{X}}}^{(s)} = \begin{bmatrix} \underline{\mathbf{X}} \\ \sqrt{\lambda}\,\underline{\mathbf{X}}^{(s)} \end{bmatrix}$$

   étendu des variables d'entrée est formé (130) par où $\lambda$ est un réel positif non nul et $\mathbf{X}^{(s)}$ est la dérivée d'ordre $s$ du tenseur $\underline{\mathbf{X}}$ par rapport à l'instant d'observation.

3. Méthode de calibration d'une interface neuronale directe selon la revendication 1, **caractérisée en ce que** le tenseur

   $$\widetilde{\underline{\mathbf{X}}}^P = \begin{bmatrix} \underline{\mathbf{X}} \\ \sqrt{\mu}\left(\underline{\mathbf{X}} - \underline{\breve{\mathbf{X}}}\right) \end{bmatrix}$$

   étendu des variables d'entrée est formé (230) par où $\mu$ est un réel positif non nul et $\underline{\breve{\mathbf{X}}}$ est un tenseur ayant pour composantes des valeurs polynomiales $P_{x_{i-l},...,x_{i+l}}(x)$ où $x$ représente la composante correspondante du tenseur $\underline{\mathbf{X}}$ et $P_{x_{i-l},...,x_{i+l}}(.)$ est un polynôme d'un degré $p$ prédéterminé fournissant la meilleure approximation des composantes $x_{i-l},...,x_{i+l}$ en différents instants d'observation.

4. Méthode de calibration d'une interface neuronale directe selon la revendication 1, **caractérisée en ce que** le tenseur

$$\widetilde{\underline{\mathbf{X}}}^{comb} = \begin{bmatrix} \underline{\mathbf{X}} \\ \sqrt{\lambda}\,\underline{\mathbf{X}}^{(s)} \\ \sqrt{\mu}\left(\underline{\mathbf{X}} - \underline{\check{\mathbf{X}}}\right) \end{bmatrix}$$

étendu des variables d'entrée est donné par                                        où $\lambda,\mu$ sont des réels positifs non nuls, $\underline{\mathbf{X}}^{(s)}$ est la dérivée d'ordre $s$ du tenseur $\underline{\mathbf{X}}$ par rapport à l'instant d'observation, $\underline{\check{\mathbf{X}}}$ est un tenseur ayant pour composantes des valeurs polynomiales $P_{x_{i-l},...,x_{i+l}}(x)$ où $x$ représente la composante correspondante du tenseur $\underline{\mathbf{X}}$ et $P_{x_{i-l},...,x_{i+l}}(.)$ est un polynôme d'un degré $p$ prédéterminé fournissant la meilleure approximation des valeurs $x_{i-l},...,x_{i+l}$ en différents instants d'observation.

5. Méthode de calibration d'une interface neuronale directe selon l'une des revendications précédentes, **caractérisée en ce que** le tenseur des variables d'entrée est d'ordre 4, le premier mode du tenseur correspondant aux instants d'observation, le second mode correspondant aux différents capteurs, le troisième mode correspondant au temps au sein une fenêtre d'observation, le quatrième correspond à une bande de fréquence dans une décomposition temps-fréquence au sein d'une fenêtre d'observation.

6. Méthode de calibration d'une interface neuronale directe selon la revendication 5, **caractérisée en ce que** ledit prétraitement comprend une étape de soustraction d'une moyenne d'ensemble à chacun des signaux électro-physiologiques et à effectuer une décomposition par ondelettes des signaux ainsi obtenus sur chacune des fenêtres d'observation.

7. Méthode de calibration d'une interface neuronale directe selon l'une des revendications précédentes **caractérisée en ce que** les signaux électro-physiologiques sont des signaux électrocorticographiques (ECoG).

**Patentansprüche**

1. Verfahren zur Kalibrierung einer direkten neuronalen Schnittstelle, die dazu ausgelegt ist, eine Mehrzahl von elektrophysiologischen Signalen zu empfangen, die mit Hilfe einer Mehrzahl von Sensoren während einer Mehrzahl von Beobachtungsfenstern erfasst worden sind, die Beobachtungszeitpunkten zugeordnet sind, und Steuersignale zu liefern, die eine Trajektorie beschreiben, die durch einen Computer oder eine Maschine zu realisieren ist, wobei die elektrophysiologischen Signale Gegenstand einer Vorbehandlung (110, 220) sind, um einen Tensor $\underline{\mathbf{X}}$ von Eingangsvariablen zu erhalten, die für die elektrophysiologischen Signale repräsentativ sind, wobei die Trajektorie repräsentiert wird (120,220) durch einen Tensor $\underline{\mathbf{Y}}$ von Ausgangsvariablen, wobei die direkte neuronale Schnittstelle ein lineares Vorhersagemodell verwendet, um den Tensor von Ausgangsvariablen $\underline{\mathbf{Y}}$ ausgehend von dem Tensor von Eingangsvariablen $\underline{\mathbf{X}}$ abzuschätzen, **dadurch gekennzeichnet, dass**:

man den Tensor $\underline{\mathbf{X}}$ zum Zweck des Erhaltens eines erweiterten Tensors von Eingangsvariablen ($\underline{\tilde{\mathbf{X}}}^{(s)}, \underline{\tilde{\mathbf{X}}}^{P}, \underline{\tilde{\mathbf{X}}}^{comb}$) erweitert (130, 230) durch Verschachtelung des Tensors $\underline{\mathbf{X}}$ und eines zweiten Tensors, umfassend wenigstens eine Ableitung der Ordnung (s) von $\underline{\mathbf{X}}$ gemäß dem Beobachtungszeitpunkt und/oder einer Differenz zwischen dem Tensor $\underline{\mathbf{X}}$ und einem Tensor $\underline{\check{\mathbf{X}}}$, dessen Komponenten erhalten sind ausgehend von einer Polynominterpolation der Komponenten von $\underline{\mathbf{X}}$ gemäß den Beobachtungszeitpunkten;
man den Tensor $\underline{\mathbf{Y}}$ (140,240) mit einem Nulltensor erweitert gemäß dem Modus der Beobachtungszeitpunkte, um einen erweiterten Tensor von Ausgangsvariablen $\underline{\tilde{\mathbf{Y}}}$ zu erhalten;
man eine multivariate Regression (150,250) der kleinsten partiellen Quadrate (NPLS) zwischen dem erweiterten Tensor der Ausgangsvariablen $\underline{\tilde{\mathbf{Y}}}$ und dem erweiterten Tensor der Eingangsvariablen durchführt;
wobei das lineare Vorhersagemodell parametrisiert wird (160,260) mit Hilfe von Maßzahlenmatrizen ($\mathbf{B}_f$, $f = 1,..,F$) und von Gewichtungsvektoren ($\mathbf{w}_i^f$, $\mathbf{q}_j^f$, $f = 1,..,F$), die durch die multivariate Regression geliefert werden.

2. Verfahren zur Kalibrierung einer direkten neuronalen Schnittstelle nach Anspruch 1, **dadurch gekennzeichnet,**

**dass** der erweiterte Tensor der Eingangsvariablen gebildet ist (130) durch $\widetilde{\underline{\mathbf{X}}}^{(s)} = \begin{bmatrix} \underline{\mathbf{X}} \\ \sqrt{\lambda}\,\underline{\mathbf{X}}^{(s)} \end{bmatrix}$, wobei $\lambda$ eine reelle positive Zahl ungleich Null ist, und wobei $\mathbf{X}^{(s)}$ die Ableitung der Ordnung $s$ des Tensors $\underline{\mathbf{X}}$ bezüglich des Beobachtungszeitpunkts ist.

3. Verfahren zur Kalibrierung einer direkten neuronalen Schnittstelle nach Anspruch 1, **dadurch gekennzeichnet,**

**dass** der erweiterte Tensor der Eingangsvariablen gebildet ist (230) durch $\widetilde{\underline{\mathbf{X}}}^{P} = \begin{bmatrix} \underline{\mathbf{X}} \\ \sqrt{\mu}\left(\underline{\mathbf{X}} - \underline{\breve{\mathbf{X}}}\right) \end{bmatrix}$, wobei $\mu$ eine positive reelle Zahl ungleich Null ist, und wobei $\underline{\breve{\mathbf{X}}}$ ein Tensor ist, der als Komponenten Polynomwerte P *(x)* hat, wobei *x* die entsprechende Komponente des Tensors $\underline{\mathbf{X}}$ repräsentiert, und P (.) ein vorbestimmtes Polynom mit einem Grad *p* ist, das die beste Approximation der Komponenten $x_{i-l},...,x_{i+l}$ zu verschiedenen Beobachtungszeitpunkten liefert.

4. Verfahren zur Kalibrierung einer direkten neuronalen Schnittstelle nach Anspruch 1, **dadurch gekennzeichnet,**

**dass** der erweiterte Tensor der Eingangsvariablen gegeben ist durch $\widetilde{\underline{\mathbf{X}}}^{comb} = \begin{bmatrix} \underline{\mathbf{X}} \\ \sqrt{\lambda}\,\underline{\mathbf{X}}^{(s)} \\ \sqrt{\mu}\left(\underline{\mathbf{X}} - \underline{\breve{\mathbf{X}}}\right) \end{bmatrix}$, wobei $\lambda, \mu$ positive reelle Zahlen ungleich Null sind, wobei $\mathbf{X}^{(s)}$ die Ableitung der Ordnung $s$ des Tensors $\underline{\mathbf{X}}$ bezüglich des Beobachtungszeitpunkts ist, wobei $\underline{\breve{\mathbf{X}}}$ ein Tensor ist, der als Komponenten Polynomwerte $P_{x_{i-l},...,x_{i+l}}(x)$ hat, wobei *x* die entsprechende Komponente des Tensors $\underline{\mathbf{X}}$ repräsentiert, und wobei $P_{x_{i-l},...,x_{i+l}}(.)$ ein vorbestimmtes Polynom mit einem Grad *p* ist, das die beste Approximation der Werte $x_{i-l},...,x_{i+l}$ zu verschiedenen Beobachtungszeitpunkten liefert.

5. Verfahren zur Kalibrierung einer direkten neuronalen Schnittstelle nach einem der vorhergehenden Ansprüche, **dadurch gekennzeichnet, dass** der Tensor von Eingangsvariablen die Ordnung 4 hat, wobei der erste Modus des Tensors den Beobachtungszeitpunkten entspricht, wobei der zweite Modus den verschiedenen Sensoren entspricht, wobei der dritte Modus der Zeit innerhalb eines Beobachtungsfensters entspricht, wobei der vierte einem Frequenzband in einer Zeit-Frequenz-Zerlegung innerhalb eines Beobachtungsfensters entspricht.

6. Verfahren zur Kalibrierung einer direkten neuronalen Schnittstelle nach Anspruch 5, **dadurch gekennzeichnet, dass** die Vorbehandlung einen Schritt des Subtrahierens eines Mittelwerts der Gesamtheit von jedem der elektrophysiologischen Signale umfasst, und die Durchführung einer Wavelet-Zerlegung der derart erhaltenen Signale auf jedem der Beobachtungsfenster.

7. Verfahren zur Kalibrierung einer direkten neuronalen Schnittstelle nach einem der vorhergehenden Ansprüche, **dadurch gekennzeichnet, dass** die elektrophysiologischen Signale elektrokortikographische Signale (ECoG) sind.

**Claims**

1. A method of calibrating a brain computer interface for receiving a plurality of electro-physiological signals acquired by means of a plurality of sensors during a plurality of observation windows associated with observation epochs and providing control signals describing a trajectory to be carried out by a computer or a machine, said electro-physiological signals being subjected to a pretreatment (110, 210) to obtain a tensor $\mathbf{X}$ of input variables representative of said electro-physiological signals, said trajectory being represented (120, 220) by a tensor $\mathbf{Y}$ of output variables, the brain computer interface using a linear predictive model to estimate the tensor $\mathbf{Y}$ of output variables from the tensor $\mathbf{X}$ of input variables, **characterised in that**:

tensor $\underline{\mathbf{X}}$ is extended (130, 230) to obtain an tensor of input variables $(\tilde{\underline{\mathbf{X}}}^{(s)}, \tilde{\underline{\mathbf{X}}}^{P}, \tilde{\underline{\mathbf{X}}}^{comb})$ extended through concatenation, of the tensor $\underline{\mathbf{X}}$ and of a second tensor comprising at least one order derivative (s) of $\underline{\mathbf{X}}$ according to the observation epoch and/or a difference between the tensor $\underline{\mathbf{X}}$ and a tensor $\check{\underline{\mathbf{X}}}$ the components of which are obtained from a polynomial interpolation of the components of $\underline{\mathbf{X}}$ according to the observation epochs;

tensor $\underline{\mathbf{Y}}$ (140, 240) is extended by a zero tensor according to the mode of the observation epochs to obtain an extended tensor $\tilde{\underline{\mathbf{Y}}}$ of output variables;

a N-way regression (150, 250) of the partial least squares (NPLS) is performed between the extended tensor of output variables $\tilde{\underline{\mathbf{Y}}}$ and the extended tensor of input variables;

the linear predictive model is parameterized (160, 260) by means of the score matrices ($\mathbf{B}_f$, $f = 1, ..., F$) and the weighting vectors ($\mathbf{w}^f_i$, $\mathbf{q}^f_j$, $f = 1, ..., F$) provided by said N-way regression.

2. The method of calibrating a brain computer interface according to claim 1, **characterised in that** the extended tensor of the input variables is formed (130) by

$$\tilde{\underline{\mathbf{X}}}^{(s)} = \begin{bmatrix} \underline{\mathbf{X}} \\ \sqrt{\lambda}\,\underline{\mathbf{X}}^{(s)} \end{bmatrix}$$

where $\lambda$ is a non-zero positive real number and $\underline{\mathbf{X}}^{(s)}$ is the s-order derivative of the tensor $\underline{\mathbf{X}}$ with respect to the observation epoch.

3. The method of calibrating a brain computer interface according to claim 1, **characterised in that** the extended tensor of the input variables is formed (230) by

$$\tilde{\underline{\mathbf{X}}}^{P} = \begin{bmatrix} \underline{\mathbf{X}} \\ \sqrt{\mu}\left(\underline{\mathbf{X}} - \check{\underline{\mathbf{X}}}\right) \end{bmatrix}$$

where $\mu$ is a non-zero positive real number and $\check{\underline{\mathbf{X}}}$ is a tensor the components of which are polynomial values $P_{x_{i-l},...,x_{i+l}}(x)$ where $x$ represents the corresponding component of tensor $\underline{\mathbf{X}}$ and $P_{x_{i-l},...,x_{i+l}}(.)$ is a polynomial of a predetermined degree $p$ providing the best approximation of the components $x_{i-l}, ..., x_{i+l}$ at different observation epochs.

4. The method of calibrating a brain computer interface according to claim 1, **characterised in that** the extended tensor of the input variables is given by

$$\tilde{\underline{\mathbf{X}}}^{comb} = \begin{bmatrix} \underline{\mathbf{X}} \\ \sqrt{\lambda}\,\underline{\mathbf{X}}^{(s)} \\ \sqrt{\mu}\left(\underline{\mathbf{X}} - \check{\underline{\mathbf{X}}}\right) \end{bmatrix}$$

where $\lambda, \mu$ are non-zero positive real numbers, $\underline{\mathbf{X}}^{(s)}$ is the s-order derivative of the tensor $\underline{\mathbf{X}}$ with respect to the observation epoch, $\check{\underline{\mathbf{X}}}$ is a tensor the components of which are polynomial values $P_{x_{i-l},...,x_{i+l}}(x)$ where $x$ represents the corresponding component of tensor $\underline{\mathbf{X}}$ and $P_{x_{i-l},...,x_{i+l}}(.)$ is a polynomial of a predetermined degree $p$ providing the best approximation of the values $x_{i-l}, ..., x_{i+l}$ at different observation epochs.

5. The method of calibrating a brain computer interface according to one of the preceding claims, **characterised in that** the tensor of input variables is a 4th order tensor, the first mode of the tensor corresponding to the observation epochs, the second mode corresponding to the different sensors, the third mode corresponding to the time within an observation window, the fourth one corresponding to a frequency band in a time-frequency decomposition within an observation window.

6. The method of calibrating a brain computer interface according to claim 5, **characterised in that** said pretreatment comprises a step of subtracting an ensemble average from each of the electro-physiological signals and performing a wavelet decomposition of the thus obtained signals on each of the observation windows.

7. The method of calibrating a brain computer interface according to one of the preceding claims, **characterised in that** the electro-physiological signals are electrocorticographic (ECoG) signals.

Prétraitement des signaux électro-physiologiques et obtention du tenseur des variables d'entrée $\underline{\mathbf{X}}$

110

Détermination du tenseur de variables de sortie $\underline{\mathbf{Y}}$ représentatif de la trajectoire

120

Construction d'un tenseur d'entrée étendu

$$\widetilde{\underline{\mathbf{X}}}^{(s)} = \begin{bmatrix} \underline{\mathbf{X}} \\ \sqrt{\lambda}\underline{\mathbf{X}}^{(s)} \end{bmatrix}$$

130

Construction d'un tenseur de sortie étendu

$$\widetilde{\underline{\mathbf{Y}}}^{s} = \begin{bmatrix} \underline{\mathbf{Y}} \\ \underline{\mathbf{0}}^{s} \end{bmatrix}$$

140

Régression NPLS entre $\widetilde{\underline{\mathbf{Y}}}^{s}$ et $\widetilde{\underline{\mathbf{X}}}^{(s)}$

150

Paramétrisation du modèle prédictif de l'interface au moyen des vecteurs de pondération $\mathbf{w}_i^f, \mathbf{q}_j^f$ et des matrices de cotes $\mathbf{B}_f \quad f = 1,..,F$

160

**Fig. 1**

```
┌─────────────────────────────────────┐
│ Prétraitement des signaux électro-   │      210
│ physiologiques et obtention du tenseur│
│      des variables d'entrée X        │
└─────────────────────────────────────┘
```

Prétraitement des signaux électro-physiologiques et obtention du tenseur des variables d'entrée $\underline{X}$  — 210

Détermination du tenseur de variables de sortie $\underline{Y}$ représentatif de la trajectoire — 220

Construction d'un tenseur d'entrée étendu
$$\widetilde{\underline{X}}^{P} = \begin{bmatrix} \underline{X} \\ \sqrt{\mu}\left(\underline{X} - \underline{\breve{X}}\right) \end{bmatrix}$$
— 230

Construction d'un tenseur de sortie étendu
$$\widetilde{\underline{Y}}^{P} = \begin{bmatrix} \underline{Y} \\ \mathbf{0}^{P} \end{bmatrix}$$
— 240

Régression NPLS entre $\widetilde{\underline{Y}}^{P}$ et $\widetilde{\underline{X}}^{P}$ — 250

Paramétrisation du modèle prédictif de l'interface au moyen des vecteurs de pondération $\mathbf{w}_i^f, \mathbf{q}_j^f$ et des matrices de cotes $\mathbf{B}_f \quad f = 1,..,F$ — 260

**Fig. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013057544 A

**Littérature non-brevet citée dans la description**

- **P. GELADI et al.** Partial least-squares regression : a tutorial. *Analytica Chimica Acta,* 1986, vol. 185, 1-17
- **S. VANCOLEN.** *La régression PLS,* Juin 2004
- **A. ELISEYEV ; T. AKSENOVA.** Recursive N-Way Partial Least Squares for Brain-Computer Interface. *PLOS One,* Juillet 2013, vol. 8 (7), e69962